# EUROPEAN PATENT SPECIFICATION

(11) **EP 2 076 929 B1**
(45) Date of publication and mention of the grant of the patent: **14.03.2012**
(21) Application number: 07833352.3
(22) Date of filing: 16.10.2007
(51) Int. Cl.: H01M 2/20, H01M 10/04, H01M 10/44, H01M 10/02, H01M 10/052, H01M 6/42

(54) **HIGH POWER SECONDARY BATTERY SYSTEM COMPRISING ASYMMETRIC CHARGED CELLS**
HOCHLEISTUNGS-SEKUNDÄRBATTERIESYSTEM MIT ASYMMETRISCHEN GELADENEN ZELLEN
SYSTÈME DE BATTERIE AUXILIAIRE HAUTE PUISSANCE COMPRENANT DES ÉLÉMENTS CHARGÉS ASYMÉTRIQUES

(30) Priority: 16.10.2006 KR 20060100095
(43) Date of publication of application: 08.07.2009
(73) Proprietor: LG Chem, Ltd., Youngdungpo-gu, Seoul 150-721 (KR)
(72) Inventor: PAULSEN, Jens M., Daejeon 305-340 (KR); YOON, Songhun, Daejeon 305-727 (KR); PARK, Hong-Kyu, Daejeon 305-325 (KR)
(74) Representative: HOFFMANN EITLE
(86) International application number: PCT/KR2007/005043
(87) International publication number: WO 2008/048028

(56) References cited:
- EP-A2- 1 921 705
- WO-A1-00/54359
- JP-A- 9 180 768
- US-A- 5 903 131
- US-A- 6 054 840
- US-A1- 2003 117 109
- US-A1- 2003 198 866
- US-A1- 2007 026 315
- US-A1- 2007 166 607

## Description

### FIELD OF THE INVENTION

The present invention relates to a high power secondary battery system including asymmetric charge cells, and, more particularly, to a battery system including two or more kinds of cell lines having different charge and discharge characteristics, wherein each cell line includes one or more battery cells connected in series with each other, and the battery cells of at least one cell line exhibit a high-rate charge characteristic, whereas the battery cells of at least another cell line exhibit a high-rate discharge characteristic, thereby providing a high power.

### BACKGROUND OF THE INVENTION

In recent years, as mobile devices have been increasingly developed, and the demand of such mobile devices has increased, the demand of secondary batteries has also sharply increased as an energy source for the mobile devices. Among them is a lithium secondary battery having a high energy density and a high discharge voltage, on which much research has been carried out and which is now commercially and widely used.

Also, as concern about environmental problems has increased, much research has been carried out on electric vehicles and hybrid electric vehicles, which can replace existing vehicles, such as gasoline vehicles and diesel vehicles, using fossil fuel, which is one of the principal environmental pollution sources. A nickel-metal hydride secondary battery is mainly used as a power source for the electric vehicles and the hybrid electric vehicles. In recent years, however, the use of lithium secondary batteries, which have a high energy density and a high discharge voltage, as the power source for the electric vehicles and the hybrid electric vehicles has been attempted. Some of the lithium secondary batteries have now entered a commercialization stage.

The lithium secondary battery is constructed in a structure in which an electrode assembly, including cathodes each having an active material applied to its cathode current collector, anodes each having an active material applied to its anode current collector, porous separators disposed respectively between the cathodes and the anodes, is impregnated with a non-aqueous electrolyte including lithium salt. Lithium cobalt oxide, lithium manganese oxide, or lithium nickel oxide, or lithium composite oxide is used as the cathode active material. A carbon material is used as the anode active material.

A high-power, large-capacity battery system is required in order for the lithium secondary battery to be used as a power source for electric vehicles and hybrid electric vehicles. High-rate charge and discharge characteristics are required for such a high-power, large-capacity battery system.

For a hybrid electric vehicle, the operations of a battery system and an engine of the vehicle are changed depending upon the running conditions of the vehicle in order to minimize the use of fuel while improving the operation efficiency of the vehicle. For example, when the vehicle is running at a normal speed or running down an incline, the engine is not used, and the battery system is operated; whereby a high-rate discharge characteristic is required. When the vehicle is running in an accelerating fashion or running up an incline, the engine is mainly operated. In this case, kinetic energy is converted into electric energy, by which the battery system is charged, whereby a high-rate charge characteristic is required. Consequently, it is most ideal that both the charge characteristic and the discharge characteristic of the battery system are superior.

However, the charge characteristic and the discharge characteristic are complementary to each other. For this reason, when an electrode active material has a relatively superior charge characteristic, the electrode active material has a relatively inferior discharge characteristic. On the other hand, when an electrode active material has a relatively superior discharge characteristic, the electrode active material has a relatively inferior charge characteristic. For this reason, it is difficult for a secondary battery, including such electrode active materials, to exhibit a superior charge characteristic as well as a superior discharge characteristic. For example, lithium iron phosphorus oxide (an olivine compound) exhibits a charge characteristic superior to a discharge characteristic. Accordingly, a lithium secondary battery including the lithium iron phosphorus oxide as a cathode active material also exhibits a charge characteristic superior to a discharge characteristic. On the other hand, lithium titanium oxide (of a spinel crystal structure) exhibits a discharge characteristic superior to a charge characteristic. Accordingly, a lithium secondary battery including the lithium titanium oxide as a cathode active material also exhibits a discharge characteristic superior to a charge characteristic.

WO 0 054 359 and JP 09 180 768 disclose battery systems that simultaneously exhibit a superior charge and a superior discharge characteristic, with the combination of two different cell lines of different all chemistries.

### SUMMARY OF THE INVENTION

The present invention has been made to solve the above problems, and other technical problems that have yet to be resolved, in an alternative way to the one known from WO 0 054 359 and JP 09 180 768.

Specifically, it is an object of the present invention to provide a high-power, large-capacity battery system that is capable of simultaneously exhibiting a high-rate charge characteristic and a high-rate discharge characteristic.

It is another object of the present invention to provide a battery system constructed in a structure in which battery cells having a high charge level and battery cells having a low charge level are used together in a specific combination, and the respective cell lines are charged with different charge levels, whereby the calendar life of the battery system is increased.

It is a further object of the present invention to provide a middle- or large-sized battery system constructed in a structure in which battery cells are used as unit bodies, and the battery system provides a desired power and capacity through the combination of the battery cells.

In accordance with the present invention, the above and other objects can be accomplished by the provision of a battery system including two or more kinds of cell lines having different charge and discharge characteristics, wherein each cell line includes one or more battery cells connected in series with each other, and at least one cell line exhibits a high-rate charge characteristic, whereas at least another cell line exhibits a high-rate discharge characteristic, when the battery system is operated.

Specifically, the battery system according to the present invention is constructed in a structure in which the battery cells, included in the respective cell lines, have different charge and discharge characteristics, and therefore, the battery cells are charged and discharged in a symmetrical fashion for each cell line. Consequently, the charge and discharge characteristics of the battery system are improved, and, at the same time, the balance between the cell lines of the battery system is maintained, whereby the calendar life of the battery system is increased.

For example, when power is consumed from the battery system, the cell line exhibiting the high-rate charge characteristic complements the cell line exhibiting the high-rate discharge characteristic. Specifically, the battery cells of the cell line exhibiting the high-rate discharge characteristic are discharged, and then the battery cells of the cell line exhibiting the high-rate discharge characteristic are partially charged such that the balance between the battery cells of the cell line exhibiting the high-rate discharge characteristic and the battery cells of the cell line exhibiting the high-rate charge characteristic is maintained. When the battery cells of the battery system are charged, the process is carried out in reverse order. As a result, the charge and discharge characteristics of both the cell lines complement each other.

Generally, the battery system, which is used as a power source for facilities that are repetitively charged and discharged, is smoothly operated at a charge level of 30 to 70%. Consequently, when the overall operation condition of the battery system is established to a charge level of 30 to 70%, the battery cells of at least one cell line (hereinafter, referred to as a 'first cell line') are charged with a charge level higher than the overall charge of the battery system, whereas the battery cells of at least another cell line (hereinafter, referred to as a 'second cell line') are charged with a charge level lower than the overall charge of the battery system, whereby the charge and discharge characteristics of the cell lines complement each other, and therefore, the charge and discharge characteristics of the battery system are improved.

Especially for a hybrid electric vehicle, charge and discharge of the battery cells are repetitively carried out while the vehicle is running. For this reason, the battery system is preferably maintained at a charge level of approximately 50% such that the charge and discharge of the battery cells are frequently carried out depending upon the operation condition of the vehicle.

Consequently, when the overall operation condition of the battery system is established to a charge level of 50%, and the battery cells of at least one cell line are charged with a charge level of more than 55%, whereas the battery cells of at least another cell line are charged with a charge level of less than 45%, the charge and discharge characteristics of the cell lines complement each other, and therefore, the calendar life of the battery system is increased. Especially, the battery cells of the first cell line may be charged with a charge level of more than 60%, whereas the battery cells of the second cell line may be charged with a charge level of less than 40%.

In a preferred embodiment, the battery system is constructed such that the battery cells of the second cell line have an open circuit voltage at least 2.5% higher than that of the battery cells of the first cell line. In this case, battery cells having different charge and discharge characteristics are used for each cell line, and therefore, the charge and discharge characteristics of the first cell line are different from those of the second cell line, whereby the cell lines exhibit different open circuit voltages.

For example, when one battery cell is included in each cell line, and the battery cell of the first cell line uses Li₄Ti₅O₁₂ as an anode active material and a Li-Mn-spinel crystal structure as a cathode active material, the battery cell exhibits a potential difference of 2.5 V. On the other hand, when the battery cell of the second cell line uses hard carbon as the anode active material and LiFePO₄ as the cathode active material, the battery cell exhibits a potential difference of 3.5 V. In this case, when the battery system is charged with 3.0 V, the battery cell of the first cell line is completely charged, whereas the battery cell of the second cell line is completely discharged. Specifically, when the open circuit voltage difference is increased, the difference of the charge and discharged characteristics between the cell lines is increased, whereby both the charge characteristic and the discharge characteristic of the battery system are improved. Especially, it is preferable that the battery cells of the second cell line have an open circuit voltage at least 2.5% higher than that of the battery cells of the first cell line in order to optimally improve the charge and discharged characteristics.

In a preferred embodiment, the battery system includes two kinds of cell lines, and the battery cells of the first cell line have a relatively porous anode structure as compared with those of the second cell line, whereas the battery cells of the second cell line have a relatively porous cathode structure as compared with those of the first cell line.

Since the battery cells of one cell line have a relatively porous cathode or anode structure as compared with those of the other cell line, the surface area of the battery cells having the porous structures, which reacts with an electrolyte, is increased, and therefore, the charge and discharge characteristics of the battery cells are further improved. Specifically, the battery cells of the first cell line have the relatively porous anode structure, and therefore, an absorption speed of Li ions, discharged as the cathode active material, at which the Li ions are absorbed into the anode active material during the charge of the battery cells, is increased, whereby the charge characteristic of the battery cells is further improved. On the other hand, the battery cells of the second cell line have the relatively porous cathode structure, and therefore, an absorption speed of Li ions, at which the Li ions are absorbed into the cathode active material during the discharge of the battery cells, is increased, whereby the discharge characteristic of the battery cells is further improved.

In another preferred embodiment, the battery system includes two kinds of cell lines, the overall operation condition of the battery system is established to a charge level of 50%, and the battery cells of the first cell line have a charge pulse power greater than that of the battery cells of the second cell line at the above-specified operation condition, whereas the battery cells of the second cell line have a discharge pulse power greater than that of the battery cells of the first cell line at the above-specified operation condition.

Since the battery cells of the first cell line have a charge pulse power greater than that of the battery cells of the second cell line, the charge speed of the battery cells of the first cell line is increased. That is, the charge characteristic of the battery cell of the first cell line is further improved by increasing the charge pulse power of the battery cells of the first cell line exhibiting excellent high-rate discharge characteristic, with the result that selective charge is possible between both the cell lines. On the other hand, the battery cells of the second cell line have a discharge pulse power greater than that of the battery cells of the first cell line, and therefore, it is possible to selectively control the discharge order between both the cell lines.

The battery system according to the present invention preferably uses the following cathode and anode active materials.

Each battery cell of the first cell line includes doped or undoped lithium manganese oxide of a spinel crystal structure, doped or undoped lithium transition metal oxide of a layer crystal structure, or a mixture of the lithium manganese oxide and the lithium transition metal oxide as a major component of the cathode active material and lithium titanium oxide of a spinel crystal structure as a major component of the anode active material, and each battery cell of the second cell line includes lithium iron phosphorus oxide(an olivine compound) as a major component of the cathode active material and graphite, hard carbon, or a mixture thereof as a major component of the anode active material.

When the above-specified cathode and anode active materials are used, the first cell line exhibits a relatively high-rate charge characteristic, whereas the second cell line exhibits a relatively high-rate discharge characteristic.

Furthermore, the battery cells of the first cell line have a relatively long calendar life at a high charge level through the use of the above-specified cathode and anode active materials. On the other hand, the battery cells of the second cell line basically have a relatively long calendar life at a low charge level through the use of the above-specified cathode and anode active materials. Consequently, the calendar life of the battery system is increased.

Generally, the calendar life of a secondary battery is decreased due to the decomposition of an electrolyte through the repetitive charge and discharge of the secondary battery. Consequently, it is possible to restrain the decomposition of the electrolyte, and thus to increase the calendar life of the battery system, by establishing the battery system such that battery cells having a relatively low operation potential are charged first. The battery cells of the first cell line are charged first with a low operation potential, and therefore, the calendar life of the battery system is increased.

The "calendar life" means the life span of a secondary battery when the battery is maintained for a long period of time while the battery is in charge as well as the operation life of a secondary battery. Consequently, the calendar life is a comprehensive term.

The battery system according to the present invention may be manufactured by combining the battery cells or the cell lines depending upon a desired power and capacity. Preferably, the battery system is used in an electric vehicle, a hybrid electric vehicle, an electric motorcycle, or an electric bicycle, which has a limited installation space and requires a high-power, large-capacity battery system. Especially, when the battery system is frequently charged and discharged depending upon the operation condition thereof, such that the battery system is operated at a charge level of 30 to 70%, preferably 50%, the battery system is effectively used in a device, for example, a hybrid electric vehicle.

### DETAILED DESCRIPTION OF PREFERRED EMBODIMENTS

Now, the present invention will be described in more detail with reference to the following examples. These examples are provided only for illustrating the present invention and should not be construed as limiting the scope and spirit of the present invention.

### [Example 1]

A battery system including two cell lines was manufactured.

For the first cell line, lithium battery cells were manufactured using Li₄Ti₅O₁₂ as a major component of an anode active material and lithium manganese oxide of a spinel crystal structure as a major component of a cathode active material. Also, the lithium battery cells were constructed such that the charge capacity of the anode active material was less than that of the cathode active material. For the second cell line, on the other hand, lithium battery cells were manufactured using lithium iron phosphorus oxide (of an olivine crystal structure) as a major component of a cathode active material and hard carbon as a major component of an anode active material.

Available capacities of the two kinds of battery cells were established such that the available capacities of the two kinds of battery cells were almost equal to each other. The two cell lines were connected in parallel with each other to construct the whole secondary battery system.

As a result, the operation voltage of the battery system was 2.6 V. At the operation voltage of the battery system at a charge level of 50%, the battery cells of the first cell line were completely charged, whereas the battery cells of the second cell line were completely discharged.

### [Example 2]

A battery system including two cell lines was manufactured. The first cell line was constructed using five battery cells connected in series with each other, whereas the second cell line was constructed using four battery cells connected in series with each other.

For the first cell line, the battery cells (lithium battery cells) were manufactured using Li₄Ti₅O₁₂ as a major component of an anode active material and lithium manganese oxide of a spinel crystal structure as a major component of a cathode active material. For the second cell line, on the other hand, the battery cells (lithium battery cells) were manufactured using lithium iron phosphorus oxide (an olivine compound) as a major component of a cathode active material and carbon (a mixture of graphite and hard carbon) as a major component of an anode active material.

Available capacities of the two kinds of battery cells were established such that the available capacities of the two kinds of battery cells were almost equal to each other. The two cell lines were connected in parallel with each other to construct the whole secondary battery system.

As a result, the operation voltage of the battery system was 12.7 V. At the operation voltage of the battery system at a charge level of 50%, the battery cells of the first cell line were charged with at least 70% of a charge level, whereas the battery cells of the second cell line were charged with less than 30% of the charge level.

### [Example 3]

A battery system including two cell lines was manufactured. The first cell line was constructed using 10 battery cells connected in series with each other, whereas the second cell line was constructed using 11 battery cells connected in series with each other.

The battery cells of the first cell line were established such that the battery cells of the first cell line exhibit a high-rate discharge characteristic, and had a long calendar life at a high charge level. Specifically, the battery cells of the first cell line were manufactured using graphite as an anode active material and lithium transition oxide of a spinel crystal structure as a cathode active material.

The battery cells of the second cell line were established such that the battery cells of the second cell line exhibit a high-rate charge characteristic, and had a long calendar life at a low charge level. Specifically, the battery cells of the second cell line were manufactured using hard carbon as an anode active material and LiNiO₂ as a cathode active material.

As a result, the operation voltage of the battery system was 40 V. At the operation voltage of the battery system in a charge level of 50%, the battery cells of the first cell line were charged with at least 60% of a charge level, whereas the battery cells of the second cell line were charged with less than 40% of the charge level.

### [Example 4]

A battery system including two cell lines was manufactured. The first cell line was constructed using a plurality of battery cells connected in series with each other, and the second cell line was constructed using the same number of battery cells as the first cell line, connected in series with each other. For both the first cell line and the second cell line, the battery cells were manufactured using the same cathode active material and the same anode active material. Specifically, LiMO₂ (M=Mn-Ni-Co) of a spinel crystal structure was used as a cathode active material, and a mixture of graphite and hard carbon was used as an anode active material.

In order for the two cell lines to have different charge and discharge characteristics, however, the battery cells of the first cell line were established such that rapid discharge was possible for the battery cells of the first cell line, whereas the battery cells of the second cell line were established such that rapid charge was possible for the battery cells of the second cell line. Especially, the pores (filled with an electrolyte) of the cathode and anode active materials were designed in an asymmetric fashion to reduce an electrolyte decrease effect. For the battery cells of the first cell line, therefore, the porosity of the cathode active material was greater than that of the anode active material, whereby the first cell line exhibited a more rapid discharge characteristic. For the battery cells of the second cell line, on the other hand, the porosity of the anode active material was greater than that of the cathode active material, whereby the second cell line exhibited a more rapid charge characteristic.

As a result, while the battery system was in a charge level of 50%, the battery cells of the first cell line were charged with more than 55% of a charge level, whereas the battery cells of the second cell line were charged with less than 45% of the charge level. This result revealed that the charge or discharge characteristic of the battery cells could be changed by the change in capacity of the electrodes as well as the change in composition of the cathode and anode active materials of the respective battery cells.

### [Comparative example 1]

A battery system including two cell lines was manufactured. The first cell line was constructed using five battery cells connected in series with each other. Also, the second cell line was constructed using five battery cells connected in series with each other.

The battery cells of the first and second cell lines were established such that the battery cells of the first and second cell lines had the same charge and discharge characteristics. Specifically, the battery cells of the first and second cell lines were manufactured using the same cathode active material and the same anode active material. Also, the battery cells of the first and second cell lines were constructed in the same structure.

As a result, the operation voltage of the battery system was 40 V. At the operation voltage of the battery system in a charge level of 50%, all the battery cells of the first and second cell lines were charged with 50% of the charge level.

### [Experimental example 1]

While the battery systems manufactured according to Example 1 to Example 4 and Comparative example 1 were at a charge of 50%, the battery systems were charged and discharged with a predetermined current for 10 seconds to measure power of the respective battery systems.

**<Table 1>**

| | Example 1 | Example 2 | Example 3 | Example 4 | Comparative example 1 |
|---|---|---|---|---|---|
| Charge power (%) | 130% | 126% | 120% | 110% | 100% |
| Discharge power (%) | 120% | 120% | 115% | 108% | 100% |

As can be seen from Table 1 above, it was confirmed that both the charge and discharge characteristics of the battery systems manufactured according to Example 1 to Example 4 were increased as compared to those of the battery system manufactured according to Comparative example 1. Specifically, when the battery system was constructed such that the cell lines of the battery system had different charge and discharge characteristics, the battery cells are charged and discharged in a symmetrical fashion for each cell line, and therefore, the cell lines complemented each other. As a result, the balance between the cell lines of the battery system was maintained while the charge and discharge characteristics of the battery system were improved.

### INDUSTRIAL APPLICABILITY

As apparent from the above description, the secondary battery system is constructed such that the respective cell lines have different charge and discharge characteristics. Consequently, the present invention has the effect of maintaining the balance between the charge characteristic and the discharge characteristic of the entire battery system, and, at the same time, improving both the charge and discharge characteristics and increasing the calendar life of the secondary battery system. Furthermore, the battery cells are combined as unit bodies of the battery system to provide a battery system having a desired power and capacity.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A battery system including two kinds of cell lines having different charge and discharge characteristics, wherein
each cell line includes one or more battery cells connected in series with each other, wherein a first cell line exhibits a high-rate charge characteristics, whereas a second cell line exhibits a high-rate discharge characteristic, when the battery system is operated, and
wherein the battery cells of the first cell line have a relatively porous anode structure as compared with those of the second cell line, whereas the battery cells of the second cell line have a relatively porous cathode structure as compared with those of the first cell line.

2. The battery system according to claim 1, wherein
the overall operation condition of the battery system is established to a charge level of 30 to 70%, and
the battery cells of the first cell line are charged with a charge level higher than the overall charge of the battery system, whereas the battery cells of the second cell line are charged with a charge level lower than the overall charge of the battery system.

3. The battery system according to claim 2, wherein
the overall operation condition of the battery system is established to a charge level of 50%, and
the battery cells of the first cell line are charged with a charge level of more than 55%, whereas the battery cells of the second cell line are charged with a charge level of less than 45%.

4. The battery system according to claim 3, wherein
the battery cells of the first cell line are charged with a charge level of more than 60%, and
the battery cells of the second cell line are charged with a charge level of less than 40%.

5. The battery system according to claim 1, wherein
each battery cell of the first cell line includes doped or undoped lithium manganese oxide of a spinel crystal structure, doped or undoped lithium transition metal oxide of a layer crystal structure, or a mixture of the lithium manganese oxide and the lithium transition metal oxide as a major component of a cathode active material and lithium titanium oxide of a spinel crystal structure as a major component of an anode active material, and
each battery cell of the second cell line includes lithium iron phosphorus oxide as a major component of a cathode active material and graphite, hard carbon, or a mixture thereof as a major component of an anode active material.

6. A use of the battery system according to any one of claims 1 to 5 as a power source for electric vehicles or hybrid electric vehicles.

7. The battery system according to claim 1, wherein the battery system is frequently charged and discharged depending upon the operation condition thereof, whereby the battery system is operated at a charge level of 30 to 70%.

## Patentansprüche

1. Batteriesystem, welches zwei Arten von Zelllinien mit unterschiedlicher und Lade- und Entladecharakteristik beinhaltet, wobei
jede Zelllinie eine oder mehrere miteinander in Reihe verbundene Batteriezellen beinhaltet, wobei die erste Zelllinie eine Hochgeschwindigkeits-Ladecharakteristik aufweist, wohingegen die zweite Zelllinie eine Hochgeschwindigkeits-Entladecharakteristik aufweist, während die Batterie in Betrieb ist, und
wobei die Batteriezellen der ersten Zelllinie eine relativ poröse Anodenstruktur im Vergleich zu denjenigen der zweiten Zelllinie haben, wohingegen die Batteriezellen der zweiten Zelllinie eine relativ poröse Kathodenstruktur im Vergleich zu denjenigen der ersten Zelllinie haben.

2. Batteriesystem gemäß Anspruch 1, wobei
der Gesamtbetriebszustand des Batteriesystems auf einen Ladezustand von 30 bis 70 % angelegt ist, und
die Batteriezellen der ersten Zelllinie auf einen höheren Ladezustand als die Gesamtladung des Batteriesystems geladen werden, wohingegen die Batteriezellen der zweiten Zelllinie auf einen niedrigeren Ladezustand als die Gesamtladung des Batteriesystems geladen werden.

3. Batteriesystem gemäß Anspruch 2, wobei
der Gesamtbetriebszustand des Batteriesystems auf einen Ladezustand von 50 % angelegt ist, und
die Batteriezellen der ersten Zelllinie auf einen Ladezustand von mehr als 55 % geladen werden, wohingegen die Batteriezellen der zweiten Zelllinie auf einen Ladezustand von weniger als 45 % geladen werden.

4. Batteriesystem gemäß Anspruch 3, wobei
die Batteriezellen der ersten Zelllinie auf einen Ladezustand von mehr als 60 % geladen werden, und
die Batteriezellen der zweiten Zelllinie auf einen Ladezustand von weniger als 40 % geladen werden.

5. Batteriesystem gemäß Anspruch 1, wobei
jede Batteriezelle der ersten Zelllinie dotiertes oder undotiertes Lithiummanganoxid mit einer Spinell-Kristallstruktur, dotiertes oder undotiertes Lithiumübergangsmetalloxid mit einer Schichtkristallstruktur oder eine Mischung des Lithiummanganoxids und des Lithiumübergangsmetalloxids als Hauptbestandteil des Kathodenaktivmaterials und Lithiumtitanoxid mit einer Spinell-K-ristalistruktur als Hauptbestandteil des Anodenaktivmaterials beinhaltet, und
jede Batteriezelle der zweiten Zelllinie Lithiumeisenphosphoroxid als Hauptbestandteil des Kathodenaktivmaterials und Graphit, harten Kohlenstoff oder eine Mischung davon als Hauptbestandteil des Anodenaktivmaterials beinhaltet.

6. Verwendung des Batteriesystems gemäß einem der Ansprüche 1 bis 5 als Energiequelle für elektrische Fahrzeuge oder elektrische Hybridfahrzeuge.

7. Batteriesystem gemäß Anspruch 1, wobei das Batteriesystem je nach Betriebsweise häufig geladen und entladen wird, wobei das Batteriesystem bei einem Ladezustand von 30 bis 70 % betrieben wird.

## Revendications

1. Système de batterie comprenant deux types de lignes de piles ayant différentes caractéristiques de charge et de décharge, où
chaque ligne de piles comporte une ou plusieurs piles connectées en série entre elles, où une première ligne de piles présente une caractéristique de charge à grande vitesse, tandis qu'une deuxième ligne de piles présente une caractéristique de décharge à grande vitesse, lorsque le système de batterie est en service, et
où les piles de la première ligne de piles présentent une structure anodique relativement poreuse par rapport à celles de la deuxième ligne de piles, tandis que les piles de la deuxième ligne de piles présentent une structure cathodique relativement poreuse par rapport à celles de la première ligne de piles.

2. Système de batterie selon la revendication 1, dans lequel
l'état de fonctionnement global du système de batterie est réglé à un niveau de charge de 30 à 70 %, et
les piles de la première ligne de piles sont chargées à un niveau de charge supérieur à la charge globale du système de batterie, tandis que les piles de la deuxième ligne de piles sont chargées à un niveau de charge inférieur à la charge globale du système de batterie.

3. Système de batterie selon la revendication 2, dans lequel
l'état de fonctionnement global du système de batterie est réglé à un niveau de charge de 50 %, et
les piles de la première ligne de piles sont chargées à un niveau de charge supérieur à 55 %, tandis que les piles de la deuxième ligne de piles sont chargées à un niveau de charge inférieur à 45 %.

4. Système de batterie selon la revendication 3, dans lequel
les piles de la première ligne de piles sont chargées à un niveau de charge supérieur à 60 %, et
les piles de la deuxième ligne de piles sont chargées à un niveau de charge inférieur à 40 %.

5. Système de batterie selon la revendication 1, dans lequel
chaque pile de la première ligne de piles comporte de l'oxyde de manganèse-lithium dopé ou non d'une structure cristalline du spinelle, de l'oxyde de métal de transition-lithium dopé ou non d'une structure cristalline en couches, ou un mélange de l'oxyde de manganèse-lithium et de l'oxyde de métal de transition-lithium en tant que composant principal d'un matériau actif cathodique et de l'oxyde de titane-lithium d'une structure cristalline du spinelle en tant que composant principal d'un matériau actif anodique, et
chaque pile de la deuxième ligne de piles comporte de l'oxyde de phosphore-fer-lithium en tant que composant principal d'un matériau actif cathodique et de graphite, du carbone dur, ou de leur mélange en tant que composant principal d'un matériau actif anodique.

6. Utilisation du système de batterie selon l'une quelconque des revendications 1 à 5 en tant que source d'électricité pour des véhicules électriques ou des véhicules électriques hybrides.

7. Système de batterie selon la revendication 1, dans lequel le système de batterie est fréquemment chargé et déchargé en fonction de son état de fonctionnement, moyennant quoi le système de batterie est mis en service à un niveau de charge de 30 à 70 %.
